# EUROPEAN PATENT APPLICATION

(11) **EP 4 850 999 A1**
(43) Date of publication of application: **09.12.2026**
(21) Application number: 25180434.0
(22) Date of filing: 03.06.2025
(51) Int. Cl.: B60W 30/09, B60W 30/095, B60W 30/165, B60W 60/00, B60W 30/18

(54) **METHOD AND SYSTEM FOR OBSTACLE COLLISION AVOIDANCE BASED ON ALIGNMENT WITH A PRECEDING VEHICLE**

(71) Applicant: Bayerische Motoren Werke Aktiengesellschaft, 80809 München (DE)
(72) Inventor: Tanzmeister, Georg, 80937 München (DE)

(57) **Abstract**

The present disclosure relates to a method, automotive control unit and vehicle configured to prevent a collision of a vehicle with an obstacle within a travel lane of the vehicle based on a preceding vehicle within the travel lane. The preceding vehicle follows a drive path circumnavigating the obstacle. The method is configured to be performed by an ADS function and comprises: estimating a bounding box of the preceding vehicle within the travel lane, the bounding box including an estimation uncertainty, detecting a lateral deviation of the bounding box from a center line of the travel lane based on a lateral deviation threshold, if the lateral deviation has been detected, generating a safe bounding box of the preceding vehicle based on the bounding box and the estimation uncertainty, and causing the vehicle to align with the preceding vehicle based on the safe bounding box.

## Description

### TECHNICAL FIELD

The invention generally relates to collision avoidance in vehicles implementing one or more automated driving system features and more precisely to collision avoidance by such vehicles based on alignment with preceding vehicles.

### BACKGROUND

A vehicle implementing one or more automated driving system (ADS) features typically employs a plurality of automotive sensors to determine the driving environment of the vehicle, including the location of other road users as well as potential obstacles. The determination of the driving environment relies on various aspects of the automotive sensors, such as their resolutions, their fields of view and their detection range, as well as on various aspects of the processing of the automotive sensor data obtained by the automotive sensors, such as the accuracy of bounding boxes enclosing various road users detected in the driving environment as well as the intent of the various road users derived from the automotive sensor data. Both the automotive sensor aspects as well as the processing aspects may pose challenges in ensuring the safety of the of the one or more ADS features. One of the challenges posed by these aspects is the detection of obstacles ahead of the vehicle, which may be invisible to the vehicle, e.g. due to traffic obstructing the view of the one or more sensors or due to a given obstacle being outside the range or the fields of view of the one or more automotive sensors. The danger posed by challenges in detecting obstacles may be particularly acute in the context of ADS features, as ADS features perform the entire dynamic driving task (DDT) with the driver of the vehicle either merely serving as DDT fallback-ready user or not serving any role in the performance of the DDT at all.

Therefore, it is an object of the present disclosure to provide a determination of obstacles ahead of a vehicle providing the safety required by ADS features.

### SUMMARY OF THE INVENTION

To achieve this objective, the present disclosure provides a method for preventing a collision of a vehicle with an obstacle within a travel lane of the vehicle based on a preceding vehicle within the travel lane. The preceding vehicle follows a drive path circumnavigating the obstacle. The method is configured to be performed by an ADS function and comprises: estimating a bounding box of the preceding vehicle within the travel lane, the bounding box including an estimation uncertainty, detecting a lateral deviation of the bounding box from a center line of the travel lane based on a lateral deviation threshold, if the lateral deviation has been detected, generating a safe bounding box of the preceding vehicle based on the bounding box and the estimation uncertainty, and causing the vehicle to align with the preceding vehicle based on the safe bounding box.

The present disclosure further provides a corresponding automotive control unit and a vehicle comprising the automotive control unit.

### BRIEF DESCRIPTION OF THE DRAWINGS

Examples of the present disclosure will be described with reference to the following appended drawings, in which like reference signs refer to like elements.
Fig. 1 shows an exemplary top-down view of a vehicle driving along a road with a preceding vehicle avoiding an obstacle according to examples of the present disclosure.
Fig. 2 illustrates the concept of lateral deviation by the preceding vehicle and a corresponding bounding box from a center line of a travel lane of the vehicle based on the exemplary top-down view of Fig. 1 according to examples of the present disclosure.
Fig. 3 shows the exemplary top-down view of Fig. 1 with an example safe bounding box and a resulting safe driving path determined by the vehicle superimposed according to examples of the present disclosure.
Fig. 4 shows the exemplary top-down view of Fig. 1 with an example safe bounding box and a resulting safe driving path determined by the vehicle superimposed according to examples of the present disclosure.
Fig. 5 illustrates a preceding vehicle deviating from a center line of a lane with a further preceding vehicle not deviating from the center lane according to examples of the present disclosure.
Fig. 6 shows a flowchart of a method for preventing a collision of a vehicle with an obstacle within a travel lane of the vehicle based on a preceding vehicle within the travel lane according to examples of the present disclosure.
Fig. 7 illustrates a vehicle according to examples of the present disclosure.
Fig. 8 illustrates an automotive control unit according to examples of the present disclosure.

It should be understood that the above-identified drawings are in no way intended to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

### DETAILED DESCRIPTION

The present disclosure provides a method, a corresponding automotive control unit and a vehicle configured to prevent a collision of the vehicle with an obstacle within a travel lane of the vehicle based on a preceding vehicle within the travel lane. That is, the driving behavior of the preceding vehicle is analyzed by an ADS function of the vehicle. If the driving behavior is deemed to be indicative of a driving maneuver intended to avoid collision with an obstacle not yet detected by the vehicle, the ADS function aligns the vehicle with the preceding vehicle in order to avoid colliding with the obstacle.

More precisely, the ADS function estimates a bounding box for the preceding vehicle as part of the determination of the driving environment performed by the vehicle. If the bounding box deviates from a center line of the travel lane, the preceding vehicle is deemed to be performing a driving maneuver intended to avoid collision with an obstacle. In order to ensure that the vehicle does not collide with the obstacle, the ADS feature then proceeds to determine a safe bounding box in view of any inaccuracies of the bounding box determination and aligns the vehicle with the safe bounding box.

This alignment approach based on the safe bounding box increases the safety of the ADS feature in two ways. Firstly, the preceding vehicle is deemed to be aware of obstacles ahead in the travel lane sooner than the vehicle itself. Secondly, the safe bounding box takes into account any localization issues of the preceding vehicle caused by inaccuracies of the automotive sensor data and/or the processing thereof. In other words, the alignment approach based on the safe bounding box addresses both safety issues arising from the range and/or a blocked field of view of the automotive sensors of the vehicle as well as safety issues arising from a potentially imprecise localization of the preceding vehicle.

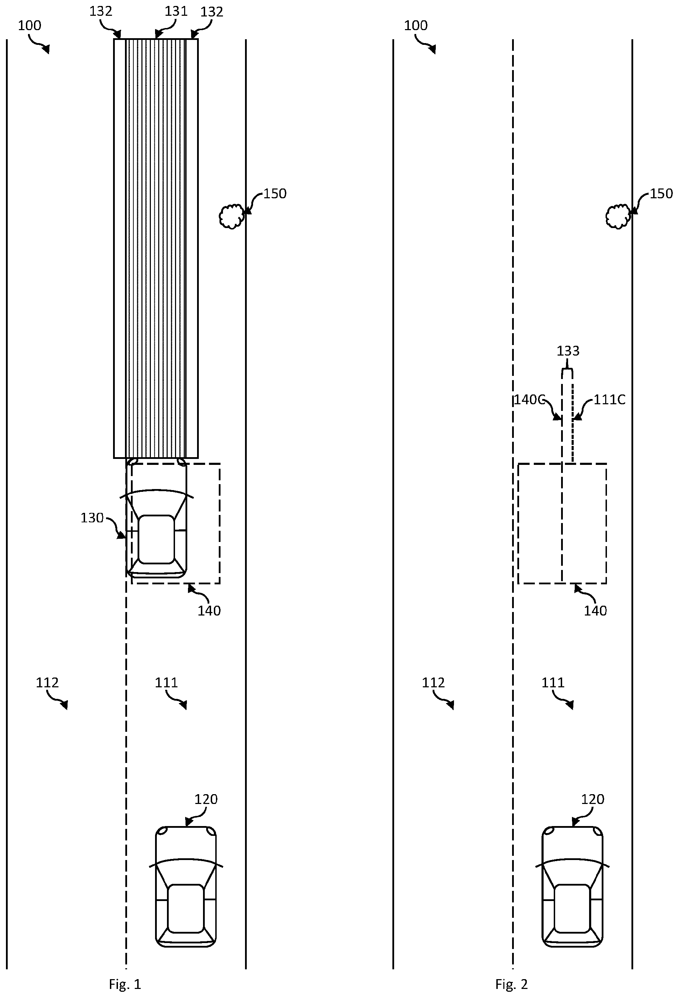

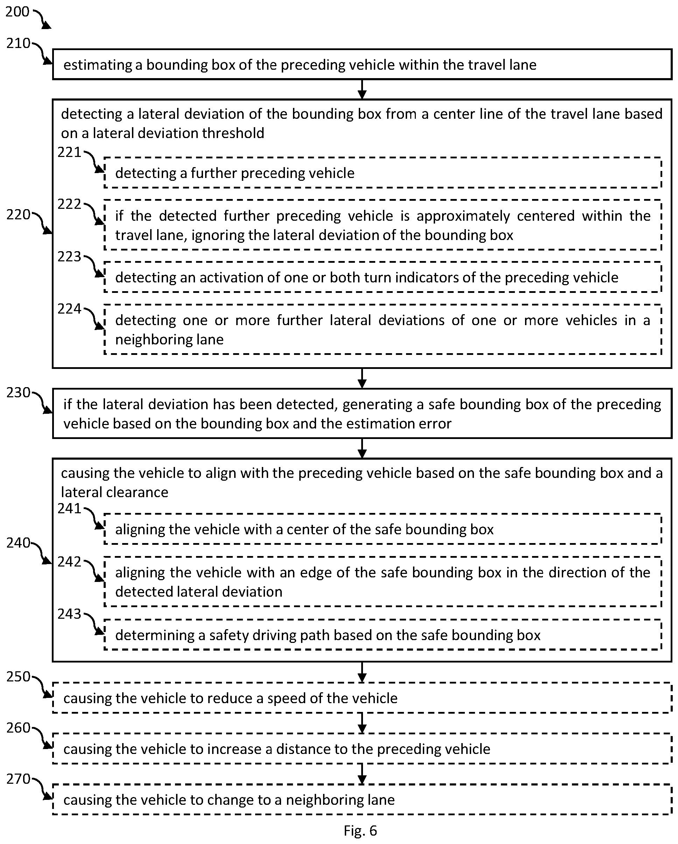

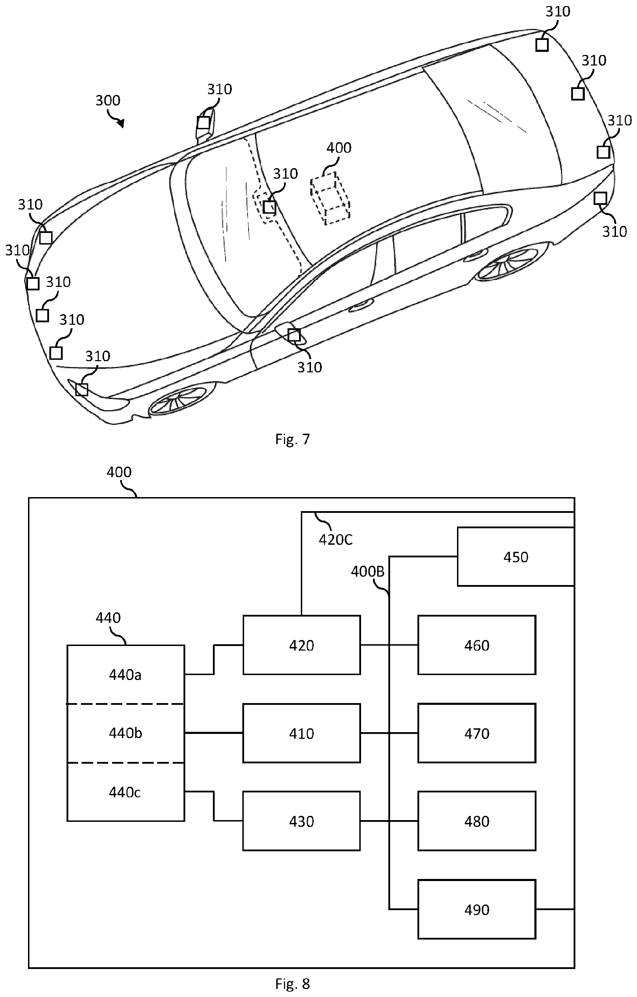

This general concept will now be illustrated with reference to the flow chart of Fig. 6 and the various road scenarios, bounding boxes and safe bounding boxes illustrated in Figs. 1 to 5. In addition, Figs. 7 and 8 provide examples of the vehicle and the automotive control unit, respectively.

Fig. 6 illustrates a method 200 configured to prevent a collision of a vehicle with an obstacle within a travel lane of the vehicle based on a preceding vehicle within the travel lane. Throughout Figs. 1 to 5, the vehicle, the obstacle, the travel lane and the preceding vehicle are respectively illustrated by vehicle 120, obstacle 150, travel lane 111 and preceding vehicle 130.

It will be understood that dashed boxes in Fig.6 illustrate optional steps of method 200. It will further be understood that the steps shown in Fig. 6 may be performed at least partially concurrently and/or in any order as permitted by the logical relationship of the steps and as discussed in detail below. Boxes shown in Fig. 6 inside boxes indicate sub-steps of steps of method 200, which may, if implemented, be performed in any order within a given step.

The expression vehicle in the context of the present disclosure, e.g. as used to refer to vehicle 120, preceding vehicle 130 and further preceding vehicle 170, refers to any kind of motor vehicle configured to transport people and/or cargo, an example of which is illustrated in more detail by vehicle 300 in Fig. 7. The motor of vehicle 300 may be any kind of motor, such as an electric motor or an internal combustion engine. Vehicle 300 may e.g. be a passenger vehicle or any other kind of vehicle including one or more automotive sensors 310 and an automotive control unit 400 enabling vehicle 300 to implement one or more driving automation system features, including an ADS function performing method 200 as part of the lateral and longitudinal control of vehicle 300 performed by the ADS function. The one or more automotive sensors 310 may accordingly be any type of automotive sensor configured to capture automotive sensor data indicative of a driving environment of vehicle 300, thereby providing environmental awareness to vehicle 300. The one or more automotive sensors 310 may e.g. be cameras, infrared cameras, radar sensors or LiDAR sensors of varying capturing ranges, resolutions and fields of view. The one or more automotive sensors 310 may further be automotive sensors configured to capture odometry data of vehicle 700, such as an acceleration, a velocity or any other odometry parameter in any one or more of three dimensions in both a local coordinate system, such as the vehicle coordinate system centered on the rear axle, or a global coordinate system, such as GPS coordinates.

The expression driving automation system feature in the context of the present disclosure is to be understood in the sense of standard J3016 of SAE International as design-specific functionality of a driving automation system at a given level of driving automation, i.e. in the context of the present disclosure any one of levels 1 to 5 of driving automation as defined in the taxonomy of driving automation of standard J3016. That is, vehicle 300 and automotive control unit 400 are configured to implement at least one driving automation system feature of any level of the driving automation as defined in the taxonomy of driving automation of standard J3016. However, method 200 is performed by an ADS function and serves to ensure the safety of the ADS function. As defined in standard J3016 of SAE International, an ADS function refers to a function configured to perform the entire DDT on a sustained basis, regardless of whether it is limited to a specific operational design domain, which only applies to level 3 and above. Accordingly, vehicle 300 and automotive control unit 400 are configured to implement at least one driving automation system feature of level 3 or higher. In other words, vehicle 300 and automotive control unit 400 may be configured to implement one or more driving automation system features, of which at least one is an ADS function.

It will be understood that the DDT in the context of standard J3016 of SAE International refers to all of the real-time operational and tactical functions required to operate a vehicle in on-road traffic, excluding the strategic functions such as trip scheduling and selection of destinations and waypoints, and includes, without limitation, the following subtasks: lateral vehicle motion control via steering, longitudinal vehicle motion control via acceleration and deceleration, monitoring the driving environment via object and event detection, recognition, classification, and response preparation, object and event response execution, maneuver planning and enhancing conspicuity, such as via lighting, sounding the horn, signaling, gesturing.

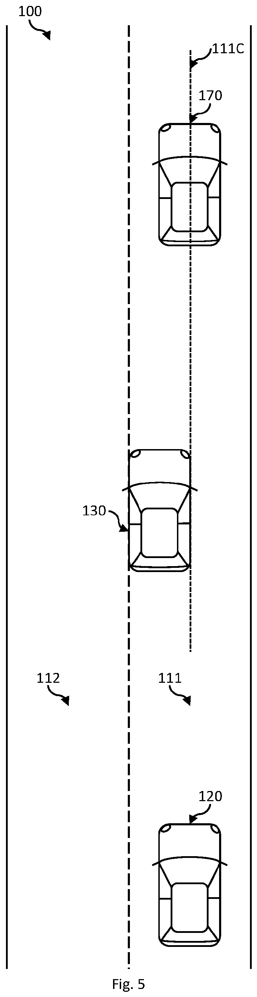

In the context of the present disclosure, preceding vehicle 130 and further preceding vehicle 170 refer to vehicles ahead of vehicle 120 in the direction of travel of vehicle 120. More precisely, preceding vehicle 130 refers to the vehicle ahead of vehicle 120 in the direction of travel without any intervening vehicles therebetween, as illustrated in Figs. 1 to 5. Further preceding vehicle 170 refers to the vehicle ahead of preceding vehicle 130 without any intervening vehicles therebetween, as illustrated in Fig. 5.

Obstacle 150 refers to any object at least partially obstructing travel lane 111 of vehicle 120 and which may thereby present a threat to the safety of vehicle 120 and the occupants of vehicle 120. As already generally discussed above and discussed in more detail below, the present disclosure provides an approach to preventing a collision with obstacle 150 before obstacle 150 is visible to vehicle 120 based on preceding vehicle 130 following a drive path 131 circumnavigating the obstacle. That is, the determination of obstacle 150 as obstructing travel lane 111 and presenting a threat to the safety of vehicle 120 is initially performed by preceding vehicle 130. It will however be understood that once obstacle 150 is within range of automotive sensors 310, vehicle 120 may analyze the object determined by preceding vehicle 130 to be an obstacle and, if vehicle 120 comes to a different assessment than preceding vehicle 130, may abort generally aligning vehicle 120 with drive path 131 of vehicle 130 circumnavigating the object.

In step 210, method 200 estimates a bounding box 140 of preceding vehicle 130 within travel lane 111. That is, method 200 processes the automotive sensor data provided by automotive sensors 310 of vehicle 120, identifies preceding vehicle 130 and estimates bounding box 140 based on the identification of preceding vehicle 130. Bounding box 140 thus corresponds to a three-dimensional enclosure of preceding vehicle 130. It will be understood that bounding box 140 may be any kind of three-dimensional shape approximately enclosing preceding vehicle 130 and need not be a rectangular cuboid as implied by the expression "box".

Fig. 1 provides an example of the estimation of bounding box 140 performed in step 210. Fig. 1 provides a top-down view of a road 100 with preceding vehicle 130 located within travel lane 111 of vehicle 120 on road 100. Fig. 1 further shows drive path 131 of preceding vehicle 130 circumnavigating obstacle 150 as well as a lateral clearance 132 on both sides of drive path 131, which may ensure a safe distance of drive path 131 to obstacle 150. Finally, Fig. 1 shows bounding box 140 as determined by vehicle 120 in the example situation illustrated in Fig. 1. Since Fig. 1 shows the actual location and dimensions of preceding vehicle 130, which in the context of the estimation of bounding box 140 may also be referred to as the ground truth, Fig. 1 also illustrates the estimation uncertainty included in bounding box 140. In Fig. 1, the estimation uncertainty is illustrated by the fact that bounding box 140 only partially coincides with the location of preceding vehicle 130.

It will be understood that the estimation uncertainty included in bounding box 140 is not quantifiable for vehicle 120 as vehicle 120 is unaware of the ground truth, i.e. the exact location and dimensions of preceding vehicle 130. That is, the estimation uncertainty may depend on a variety of factures, including the capturing capabilities of automotives sensors 310, the processing accuracy of the automotive sensor data provided by automotive sensors 310 as well as external factors, such as the weather, and/or the shape of preceding vehicle 130. While the estimation uncertainty may be acceptable during normal lateral and/or longitudinal control of vehicle 120, the estimation uncertainty may be taken into account if preceding vehicle is deemed to be evading obstacle 150 as will be discussed with regard to steps 230 and 240.

To highlight the fact that the estimation uncertainty included in bounding box 140 is not quantifiable for vehicle 120 due to the ground truth represented by preceding vehicle 130 being unknown to vehicle 120, preceding vehicle 130 is not shown in Figs. 2 to 4.

In step 220, method 200 detects a lateral deviation 133 of bounding box 140 from a center line 111C of travel lane 111 based on a lateral deviation threshold. That is, method 200 determines in step 220 based on bounding box 140 estimated in step 210 whether preceding vehicle 130 performs a driving maneuver which may be considered indicative of avoiding obstacle 150, which is not yet visible to vehicle 120. The general concept of step 220 is illustrated in Fig. 2.

Fig. 2 shows an example top-down view of road 100, which corresponds to the example top-down view of Fig. 1, i.e. the positions of vehicle 120, preceding vehicle 130 and obstacle 150 correspond to their respective positions in Fig. 1. Fig. 2 further illustrates center line 111C of travel lane 111 of vehicle 120 as well as center line 140C of bounding box 140. As can be seen, center line 140C of bounding box 140 is offset to the left of center line 111C of travel lane 111, as indicated by lateral deviation 133. Assuming that lateral deviation 133 in Fig. 2 exceeds the lateral deviation threshold, preceding vehicle 130 of Fig. 1 by way of bounding box 140 of Fig. 2 may be considered as performing a driving maneuver evading obstacle 150. The lateral deviation threshold may be any distance value deemed to be indicative of a deliberate deviation of preceding vehicle 130 from the center line and thus of a driving maneuver evading an obstacle not yet visible to automotive sensors 310 of vehicle 120. The lateral deviation threshold may e.g. be a value between 0.1 m and 1m, depending on the width of travel lane 111 and/or typical driving behavior on road 100. The lateral deviation threshold may also be expressed as a percentage of the width o travel lane 111, such as a percentage in a range of 10% to 30%.

To increase the robustness of the detection of the lateral deviation in step 220, step 220 may include any one of sub steps 221 to 224, in which method 200 may evaluate further indicators additional to lateral deviation 133 of preceding vehicle 130 in order to decide whether preceding vehicle 130 is indeed avoiding collision with an obstacle invisible to vehicle 120.

In step 221, method 200 may detect further preceding vehicle 170 within travel lane 111 and, if further preceding vehicle 170 is approximately centered within travel lane 111, method 200 may in step 222 ignore lateral deviation 133 of bounding box 140. The concept of steps 221 and 222 is illustrated in Fig. 5, which illustrates further preceding vehicle 170 approximately centered with regard to center line 111C and preceding vehicle 130 offset with regard to center line 111C. Accordingly, preceding vehicle 130 of Fig. 5 is not considered as performing a driving maneuver intended to avoid collision with an obstacle. The lateral deviation of preceding vehicle 130 of Fig. 5 may thus be ignored.

It will be understood that steps 221 and 222 may essentially correspond to steps 210 and 220 being performed with regard to further preceding vehicle 170 instead of preceding vehicle 130. It will thus be understood that the decision to ignore the lateral deviation of preceding vehicle 130 in Fig. 5 may be based on a bounding box determined for further preceding vehicle 170 in addition to bounding box 140 determined for preceding vehicle 130 and the corresponding center lines of these bounding boxes being compared to center line 111C of travel lane 111.

In step 223, method 200 may detect an activation of one or both turn indicators of preceding vehicle 130. For example, if preceding vehicle 130 activates both turn indicators in order to indicate a hazard ahead, lateral deviation 133 may indeed be indicative of preceding vehicle 130 performing a driving maneuver avoiding a collision with an obstacle invisible to vehicle 120. However, if preceding vehicle 130 activates only one turn indicator, such as the turn indicator pointing toward neighboring lane 112, lateral deviation 133 of preceding vehicle 130 may be indicative of preceding vehicle 130 preparing to turn onto neighboring land 112 instead of being indicative of a driving maneuver avoiding collision with an obstacle.

In step 224, method 200 may detect one or more further lateral deviations of one or more vehicles in neighboring lane 112, which each deviate from a center of neighboring lane 112 in the same direction as lateral deviation 133 of preceding vehicle 130. That is, method 200 may in step 224 determine that vehicles on neighboring lane 112 mimic lateral deviation 133 of preceding vehicle 130, which may be considered to provide an additional indication that preceding vehicle 130 may indeed be performing a driving maneuver avoiding collision with obstacle 150.

In step 230, method 200 generates a safe bounding box 160 of preceding vehicle 130 based on bounding box 140 and the estimation uncertainty if lateral deviation 133 of preceding vehicle 130 has been detected. Safe bounding box 160, like bounding box 140, may be any kind of three-dimensional shape enclosing preceding vehicle 130. However, in order to account for the estimation uncertainty included in bounding box 140, safe bounding box 160 has a lower volume than bounding box 140. In other words, safe bounding box 160 may represent a more conservative estimation of the three-dimensional shape of preceding vehicle 130. While the estimation uncertainty is not quantifiable, as discussed above, the more conservative estimation of the three-dimensional shape provided by safe bounding box 160 at least partially compensates the estimation uncertainty and thereby enables method 200 to safely align vehicle 120 with the driving maneuver of preceding vehicle 130 evading obstacle 150.

The volume of safe bounding box 160 may be smaller than the volume of bounding box 140 by any measure suitable for at least partially compensating for the estimation uncertainty included in bounding box 140. For example, the volume of safe bounding box 160 may be chosen to be a fixed percentage smaller than the volume of safe bounding box 140, such as 10% or 20%. The volume of safe bounding box 160 may also be chosen to be smaller by a variable percentage, e.g. to account for changing estimation uncertainties, which may e.g. change due to weather conditions, the time of day or a confidence in the objection and event detection and recognition (OEDR) performed by vehicle 120 based on the environmental awareness of vehicle 120.

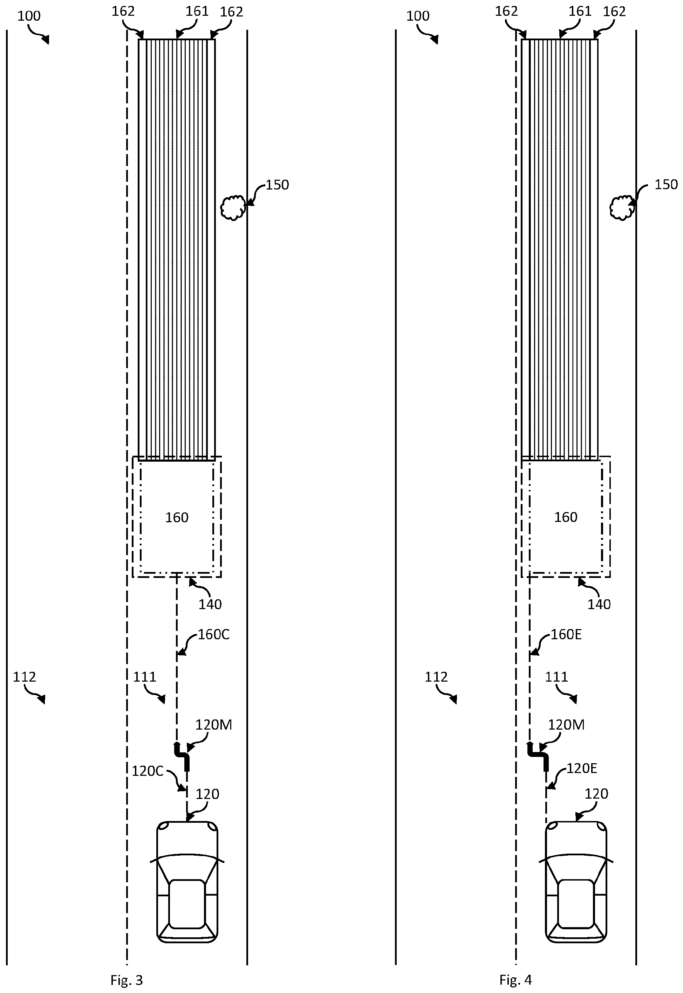

Figs. 3 and 4 illustrate safe bounding box 170 based on the top-down view of bounding box 140 of Fig. 1. As can be seen, in the two-dimensional top-down view of Figs. 3 and 4, example safe bounding box 170 in both figures is both shorter and narrower than bounding box 140 in order to compensate for the estimation uncertainty.

In step 240, method 200 causes vehicle 120 to align with preceding vehicle 130 based on safe bounding box 170. By causing vehicle 120 to align with safe bounding box 160, vehicle 120 is controlled in a manner which causes vehicle 120 to avoid collision with object 150 not yet visible to vehicle 120 based on the evasive driving maneuver of preceding vehicle 130 while at the same time accounting for the uncertainty in estimating the position and dimensions of preceding vehicle 130. To this end, method 200 may in sub-step 241 of step 240 align vehicle 120 with a center of safe bounding box 160 or may in in sub-step 242 of step 240 align vehicle 120 with an edge of safe bounding box 160 in the direction of the detected lateral deviation. These alignment approaches are respectively illustrated in Figs. 3 and 4.

Fig. 3 shows, based on the top-down view of Fig. 1, center line 120C of vehicle 120, center line 160C of safe bounding box 160 and alignment maneuver 120M causing center line 120C of vehicle 120 to align with center line 160C of safe bounding box 160. Accordingly, Fig. 3 illustrates step 240 as implemented by step 241. As can be seen, the resulting safe driving path 161 avoids obstacle 150.

Fig. 4 shows, based on the top-down view of Fig. 1, edge line 120E of vehicle 120, edge line 160E of safe bounding box 160 and alignment maneuver 120M causing edge line 120E of vehicle 120 to align with edge line 160E of safe bounding box 160. Accordingly, Fig. 4 illustrates step 240 as implemented by step 242. As can be seen, the resulting safe driving path 161 avoids obstacle 150. Due to the alignment with the edge of safe bounding box 160, the resulting safe driving path 161 is further removed from obstacle 160, thus further reducing the risk of vehicle 120 colliding with obstacle 150.

As part of the alignment of vehicle 120 with the preceding vehicle 130 based on safe bounding box 140, method 200 may in a further sub-step 243 of step 240 determine safe driving path 161. Safe driving path 161 may be determined to include safe lateral clearances 162 on both sides of safe driving path 161, as illustrated in both Figs. 3 and 4.

Following the alignment of vehicle 120 with preceding vehicle 130 in steps 240 to 243, method 200 may take any one or more of additional safety measures in steps 250 to 270 to avoid colliding with obstacle 150. In step 250, method 200 may cause vehicle 120 to reduce a speed. In step 260, method 200 may cause vehicle 120 to increase a distance to preceding vehicle 130. Finally, in step 270 method 200 may cause vehicle 120 to change to neighboring lane 112, e.g. if preceding vehicle 130 moves partially across the line separating travel lane 111 and neighboring lane 120.

In summary, method 200 is configured to prevent a collision of vehicle 120 with obstacle 150 not yet visible to vehicle 120 by determining a lateral deviation of preceding vehicle 130 and aligning vehicle 120 with preceding vehicle 140 if a lateral deviation has been determined. In order to account for the estimation uncertainty included in the determination of the location of preceding vehicle 130, method 200 determines safe bounding box 160 and aligns vehicle 120 with safe bounding box 160. Method 200 thereby prevents the collision of vehicle 120 with object 150 invisible to vehicle 150 based on the evasive maneuver of preceding vehicle 130 while accounting for any estimation uncertainty inherent in the OEDR performed by vehicle 120.

Fig. 8 shows automotive control unit 400 configured to perform method 200, which may also be referred to as an electronic control unit (ECU). Automotive control unit 400 may include a processor 410, a graphics processing unit (GPU) 420, automotive processing system 430, a memory 440, a removable storage 450, a storage 460, a cellular interface 470, a global navigation satellite system (GNSS) interface 480 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing automotive control unit 400 to perform method 200. Processor 410 may be directly coupled to any of the components of automotive control unit 410 or may be directly coupled to memory 440, GPU 420 and device bus 400B.

GPU 420 may be any kind of processing unit optimized for processing graphics related instructions or more generally for parallel processing of instructions. As such, GPU 420 may be configured to generate a display of information, such as information relating to one or more driving automation system features or telemetry data, to a driver of the vehicle, e.g. via a head-up display (HUD) or a display arranged within the view of the driver. GPU 420 may be coupled to the HUD and/or the display via connection 420C. GPU 420 may further perform at least a part of method 200 to enable fast parallel processing of instructions implementing method 600. It should be noted that in some embodiments, processor 410 may determine that GPU 420 need not perform instructions relating to method 200. GPU 420 may be directly coupled to any of the components of automotive control unit 410 or may be directly coupled to processor 410 and memory 440. In some embodiments, GPU 420 may also be coupled to the device bus.

Automotive processing system 430 may be any kind of system-on chip configured to provide trillions of operations per second (TOPS) e.g. in order to enable automotive control unit 400 to perform one or more driving automation system features while driving, which may perform longitudinal and/or lateral control of vehicle 300. Automotive processing system 430 may only interface with processor 410 or may interface with other devices via the system bus.

Memory 440 may be any kind of fast storage enabling processor 410, GPU 420 and automotive processing system 430 to store instructions for fast retrieval during processing of instructions as well as to cache and buffer data. Memory 440 may be a unified memory coupled to processor 410, GPU 420 and automotive processing system 430 in order to enable allocation of memory 440 to processor 410, GPU 420 and automotive processing system 430 as needed. Alternatively, processor 410, GPU 420 and automotive processing system 430 may be coupled to separate processor memory 440a, GPU memory 440b and automotive processing system memory 440c.

Removable storage 450 may be a storage device which may be removably coupled with automotive control unit 400. Examples include a digital versatile disc (DVD), a compact disc (CD), a Universal Serial Bus (USB) storage device, such as an external SSD, or a magnetic tape. It should be noted that removable storage 450 may store data, such as instructions of method 200 or may be omitted.

Storage 460 may be a storage device enabling storage of program instructions and other data. For example, storage 460 may be a hard disk drive (HDD), a solid state disk (SSD) or some other type of nonvolatile memory. Storage 460 may for example store the instructions of method 200.

Removable Storage 450 and storage 460 may be coupled to processor 410 via system bus 410B. System bus 410B may be any kind of bus system enabling processor 410 and optionally GPU 420 as well as automotive processing system 430 to communicate with the other devices of automotive control unit 400. The system bus may for example be a Peripheral Component Interconnect express (PCle) bus or a Serial AT Attachment (SATA) bus.

Cellular interface 470 may be any kind of interface enabling automotive control unit 400 to communicate via a cellular network, such as a 4G network or a 5G network, e.g. with other vehicles and/or roadside infrastructure in V2V or V2X communication.

GNSS interface 480 may be any kind of interface enabling automotive control unit 400 to receive positional data provided by a satellite network, such as the Global Positioning System (GPS), the Global Navigation Satellite System (GLONASS) or Galileo.

Communications interface 490 may enable automotive control unit 400 to interface with external devices, either directly or via network, via a connection as illustrated by the line coupling communications interface 490 to the outside of automotive control unit 400. Communications interface 490 may for example enable automotive control unit 400 to couple to a wired or wireless network, such as Ethernet, Wifi, a Controller Area Network (CAN) bus or any bus system appropriate for communication in vehicles. For example, automotive control unit 400 may be coupled to automotive sensors 310 or any other data sources within vehicle 300 via communications interface 490. Communications interface 490 may also include a USB port or a serial port to enable direct communication with an external device.

Automotive control unit 400 may be integrated with vehicle 300, e.g. beneath the cabin, under the dashboard or in the trunk of vehicle 700.

It will be understood that automotive control unit 400 may include further or fewer elements than shown in Fig. 8, as required by the actual implementation of automotive control unit 400. Further, the above discussed elements may be distributed across multiple (sub) units.

The invention may further be illustrated by the following examples.

In an example, a method for preventing a collision of a vehicle with an obstacle within a travel lane of the vehicle based on a preceding vehicle within the travel lane, wherein the preceding vehicle follows a drive path circumnavigating the obstacle, is configured to be performed by an automated driving system -ADS- function and comprises: estimating a bounding box of the preceding vehicle within the travel lane, the bounding box including an estimation uncertainty, detecting a lateral deviation of the bounding box from a center line of the travel lane based on a lateral deviation threshold, if the lateral deviation has been detected, generating a safe bounding box of the preceding vehicle based on the bounding box and the estimation uncertainty; and causing the vehicle to align with the preceding vehicle based on the safe bounding box.

In the example method, the causing the vehicle to align with the preceding vehicle may include aligning the vehicle with a center of the safe bounding box.

In the example method, the causing the vehicle to align with the preceding vehicle may include aligning the vehicle with an edge of the safe bounding box in the direction of the detected lateral deviation.

In the example method, the causing the vehicle to align with the preceding vehicle may include determining a safe driving path based on the safe bounding box.

In the example method, the detecting the lateral deviation may include detecting a further preceding vehicle, the further preceding vehicle preceding the preceding vehicle within the travel lane, and, if the detected further preceding vehicle is approximately centered within the travel lane, ignoring the lateral deviation of the bounding box.

In the example method, the detecting the lateral deviation may include detecting an activation of one or both turn indicators of the preceding vehicle.

In the example method, the detecting the lateral deviation may include detecting one or more further lateral deviations of one or more vehicles in a neighboring lane, the one or more further lateral deviations deviating from a center of the neighboring lane in the same direction as the lateral deviation of the preceding vehicle.

The example method may further comprise, if the lateral deviation has been detected, causing the vehicle to reduce a speed of the vehicle; and/or causing the vehicle to increase a distance to the preceding vehicle.

The example method may further comprise, if the lateral deviation has been detected, causing the vehicle to change to a neighboring lane.

An example automotive control unit comprises at least one processing unit and a memory coupled to the at least one processing unit and is configured to store machine-readable instructions, wherein the machine-readable instructions cause the at least one processing unit to: estimate a bounding box of the preceding vehicle within the travel lane, the bounding box including an estimation uncertainty, detect a lateral deviation of the bounding box from a center line of the travel lane based on a lateral deviation threshold, if the lateral deviation has been detected, generate a safe bounding box of the preceding vehicle based on the bounding box and the estimation uncertainty, and cause the vehicle to align with the preceding vehicle based on the safe bounding box.

In the example automotive control unit, the machine-readable instructions may further cause the at least one processing unit to perform the preceding method examples.

An example vehicle comprises any one of the example automotive control units.

The preceding description has been provided to illustrate a method and a system for preventing a collision of a vehicle with an obstacle based on a preceding vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

| | | | |
|---|---|---|---|
| 100 | road | 440 | memory |
| 111 | travel lane | 450 | removable storage |
| 111C | center of travel lane | 460 | storage |
| 112 | neighboring lane | 470 | cellular interface |
| 120 | vehicle | 480 | GNSS interface |
| 120C | center line of vehicle 120 | 490 | communications interface |
| 120E | edge line of vehicle 120 | | |
| 120M | alignment maneuver of vehicle 120 | | |
| 130 | preceding vehicle | | |
| 131 | drive path | | |
| 132 | lateral clearance | | |
| 133 | lateral deviation | | |
| 140 | bounding box | | |
| 140C | center line of bounding box 140 | | |
| 150 | obstacle | | |
| 160 | safe bounding box | | |
| 160C | center line of safe bounding box 160 | | |
| 160E | edge line of safe bounding box 160 | | |
| 161 | safe driving path | | |
| 162 | safe lateral clearance | | |
| 170 | further preceding vehicle | | |
| 200 | method | | |
| 200 - 270 | method steps | | |
| 300 | vehicle | | |
| 310 | automotive sensor | | |
| 400 | automotive control unit | | |
| 400B | bus | | |
| 410 | CPU | | |
| 420 | GPU | | |
| 420c | connection | | |
| 430 | automotive processing system | | |
| 440 | memory | | |

## Claims

1. Method (200) for preventing a collision of a vehicle (120, 300) with an obstacle (150) within a travel lane (111) of the vehicle (120) based on a preceding vehicle (130, 300) within the travel lane (111), wherein the preceding vehicle (130, 300) follows a drive path (131) circumnavigating the obstacle (150), the method (200) being configured to be performed by an automated driving system -ADS- function and comprising:
estimating (210) a bounding box (140) of the preceding vehicle (130, 300) within the travel lane (111), the bounding box (140) including an estimation uncertainty;
detecting a lateral deviation (133) of the bounding box (140) from a center line (111C) of the travel lane (111) based on a lateral deviation threshold;
if the lateral deviation (133) has been detected, generating (230) a safe bounding box (160) of the preceding vehicle (130, 300) based on the bounding box (140) and the estimation uncertainty; and
causing (240) the vehicle (120, 300) to align with the preceding vehicle based on the safe bounding box (160).

2. The method (200) of claim 1, wherein the causing (240) the vehicle (120, 300) to align with the preceding vehicle (130, 300) includes aligning (241) the vehicle (120, 300) with a center (160C) of the safe bounding box (160).

3. The method (200) of claim 1, wherein the causing (240) the vehicle (120, 300) to align with the preceding vehicle (130, 300) includes aligning (242) the vehicle (120, 300) with an edge of the safe bounding box (160) in the direction of the detected lateral deviation (133).

4. The method (200) of any one of the preceding claims, wherein the causing (240) the vehicle (120, 300) to align with the preceding vehicle (130, 300) includes determining (243) a safe driving path (161) based on the safe bounding box (161).

5. The method (200) of any one of the preceding claims, wherein the detecting (220) the lateral deviation (133) includes:
detecting (221) a further preceding vehicle (170, 300), the further preceding vehicle (170, 300) preceding the preceding vehicle (130, 300) within the travel lane (111); and
if the detected further preceding vehicle (160, 300) is approximately centered within the travel lane (111), ignoring (222) the lateral deviation (133) of the bounding box (140).

6. The method (200) of any one of the preceding claims, wherein the detecting (220) the lateral deviation (133) includes:
detecting an activation (223) of one or both turn indicators of the preceding vehicle (130, 300).

7. The method (200) of any one of the preceding claims, wherein the detecting (220) the lateral deviation (133) includes:
detecting (224) one or more further lateral deviations of one or more vehicles in a neighboring lane (112), the one or more further lateral deviations deviating from a center of the neighboring lane (112) in the same direction as the lateral deviation (133) of the preceding vehicle (130, 300).

8. The method (200) of any one of the preceding claims, further comprising, if the lateral deviation (133) has been detected:
causing (250) the vehicle (120, 300) to reduce a speed of the vehicle (120, 300); and/or
causing (260) the vehicle (120, 300) to increase a distance to the preceding vehicle (130, 300).

9. The method (200) of any one of the preceding claims, further comprising, if the lateral deviation (133) has been detected:
causing (270) the vehicle (120, 300) to change to a neighboring lane (112).

10. An automotive control unit (400), comprising:
at least one processing unit (410, 420, 430); and
a memory (440, 450, 460) coupled to the at least one processing unit (410, 420, 430) and configured to store machine-readable instructions,
wherein the machine-readable instructions cause the at least one processing unit (410, 420, 430) to:
estimate a bounding box (140) of a preceding vehicle (130, 300) within a travel lane (111), the bounding box (140) including an estimation uncertainty;
detect a lateral deviation (133) of the bounding box (140) from a center line (111C) of the travel lane (111) based on a lateral deviation threshold;
if the lateral deviation (133) has been detected, generate a safe bounding box (160) of the preceding vehicle (130, 300) based on the bounding box (140) and the estimation uncertainty; and
cause the vehicle (120, 300) to align with the preceding vehicle (130, 300) based on the safe bounding box (160).

11. The automotive control unit (400) of claim 10, wherein the machine-readable instructions further cause the at least one processing unit (410, 420, 430) to perform the method (200) of any one of claims 2 to 9.

12. A vehicle (120, 130, 170, 300) comprising the automotive control unit (400) of any one of claims 10 and 11.
